Europäisches Patentamt

**European Patent Office**

Office européen des brevets

(11) Publication number: **0 361 584 B1**

(19)

### EUROPEAN PATENT SPECIFICATION

(12)

(45) Date of publication of patent specification: **22.12.93** (51) Int. Cl.⁵: **C08G 67/02**

(21) Application number: **89202336.7**

(22) Date of filing: **15.09.89**

(54) **Preparation of polyketone polymers.**

(30) Priority: **19.09.88 NL 8802312**

(43) Date of publication of application:
**04.04.90 Bulletin 90/14**

(45) Publication of the grant of the patent:
**22.12.93 Bulletin 93/51**

(84) Designated Contracting States:
**BE CH DE FR GB IT LI NL**

(56) References cited:
**EP-A- 0 224 304      EP-A- 0 228 733
EP-A- 0 305 011      EP-A- 0 307 027
EP-A- 0 314 309      EP-A- 0 319 083**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Van Broekhoven, Johannes Ad-
rianus Maria
Badhuisweg 3
NL-1031 CM Amsterdam(NL)**

## Description

The invention relates to a process for the preparation of polyketone polymers, i.e. polymers of carbon monoxide with one or more olefinically unsaturated compounds.

Linear copolymers of carbon monoxide with ethene, in which the monomer units -(CO)- and -$(C_2H_4)$- occur in alternating order, can be prepared by contacting the monomers at an elevated temperature and pressure with a solution of a catalyst composition in a diluent in which the polymers are insoluble or virtually insoluble, which catalyst composition is based upon:

a) a palladium compound,

b) an anion of an acid with a pKa of less than 4, and

c) a bisphosphine of the general formula $(R_1)_2P$-R-P$(R_1)_2$, wherein $R_1$ represents an aromatic hydrocarbyl group and R is a bivalent organic bridging group containing at least two carbon atoms in the bridge.

Depending on the reaction conditions and catalyst compositions chosen, polymers with a wide variety of average molecular weights can thus be prepared.

According as the polymers mentioned in the present patent application have higher molecular weights, their intrinsic viscosities too will as a rule be higher. In order to determine the intrinsic viscosity of the present polymers, four solutions are first of all prepared by dissolving the polymer in m-cresol, at four different concentrations. Then the viscosity at 60 °C of each of these solutions relative to that of m-cresol at 60 °C is determined in a viscometer. When $T_o$ represents the efflux time of m-cresol and $T_p$ the efflux time of the polymer solution, the relative viscosity ($\eta_{rel}$) is determined by $\eta_{rel} = T_p/T_o$. The inherent viscosity ($\eta_{inh}$) can be calculated from $\eta_{rel}$, according to the formula: $\eta_{inh} = \ln \eta_{rel} / c$, wherein c represents the polymer concentration as grams per 100 ml of solution. Plotting of the $\eta_{inh}$ found for each of the four polymer solutions against the corresponding concentration (c) and subsequent extrapolation to c = 0 leads to the intrinsic viscosity [$\eta$] as dl/g, which will hereinafter be referred to not as 'intrinsic viscosity', but by the designation recommended by the International Union of Pure and Applied Chemistry of 'Limiting Viscosity Number' (LVN).

For actual application, interest tends in the first place towards polymers with an LVN (60) of from about 0.5 to 2.5 dl/g. The copolymers prepared as described hereinbefore have melting points of about 255-260 °C, which melting points are substantially independent of their LVN (60)'s.

Earlier research carried out by the Applicant into these polymers has shown that their melting points can be reduced, and thus their processibility can be improved, when in addition to carbon monoxide and ethene, one or more other $\alpha$-olefins (for the sake of brevity referred to as A), such as propene, are included in the monomer mixture from which these polymers are prepared. Thus are prepared linear polymers which are made up of units -(CO)-$(C_2H_4)$- and units -(CO)-A'-, wherein A' represents a monomer unit derived from an $\alpha$-olefin A used. The units -(CO)-$(C_2H_4)$- and -(CO)-A'- occur randomly distributed within the polymers. According as a larger amount of the monomers A is incorporated in the polymers, the polymers obtained will have lower melting points. For actual application, interest tends towards polymers with a melting point above 225 °C.

During the polymerization described hereinbefore, the polymers are obtained in the form of a suspension in the diluent. After the desired degree of polymerization is obtained, polymerization is generally terminated by cooling the reaction mixture and releasing the pressure. The polymers can be isolated from the suspension by filtration, washing and drying. The investigation carried out by the Applicant into this polymer preparation has shown that part of the catalyst composition used during polymerization ends up in the polymer formed and the rest remains behind dissolved in the diluent. Moreover, it has been found that the catalyst composition that has remained behind in the diluent still retains its activity, and may thus be considered, in principle, for use in the preparation of an additional amount of polymer. Initial plans aimed at separating the formed polymer from the catalyst-containing liquid and contacting this liquid once more with the monomer mixture on termination of the preparation of polymers of carbon monoxide with ethene and optionally one of more other $\alpha$-olefins, which polymers have an LVN (60) of 0.5-2.5 dl/g and a melting point above 225 °C, were not carried through on account of practical difficulties. These difficulties are twofold. In the first place, this liquid contains only a small amount of the quantity of palladium originally present in the catalyst composition, as a rule less than 20 %w thereof. Further, this liquid contains a considerable amount - as a rule more than 1 %w calculated on formed polymer - of oligomers. Recirculation of this liquid leads to a rapid build-up of this low-molecular weight material during the process, which naturally is undesirable. Thus far, the usual procedure was to split the separated liquid by distillation into a distillate of purified diluent which was returned to the polymerization reactor and a residue containing the catalyst rests and the oligomers. The palladium may be recovered by decomposition of the catalyst rests present in the residue and then be used in the preparation of further catalyst, if desired.

During the research made by the Applicant into the afore-mentioned polymer preparation, it was further found that it is advantageous to replace the bisphosphine of the general formula $(R_1)_2$P-R-P-$(R_1)_2$ which is used in the catalyst composition as component c) by a bisphosphine of the general formula $(R_2)_2$P-R-P$(R_2)_2$, wherein $R_2$ represents an aryl group which holds at least one alkoxy substituent ortho in respect to the phosphorus atom to which the aryl group is bound. Comparison of the behaviours of the two catalyst compositions used for preparing polymers of carbon monoxide with ethene and optionally one or more other $\alpha$-olefins, which polymers have an LVN (60) of 0.5-2.5 dl/g and a melting point above 225°C, has shown that at similar reaction rates, the catalyst compositions containing an alkoxy-substituted bisphosphine as component c) lead to polymers with considerably higher LVN's and conversely, that they display a considerably higher polymerization rate when preparing polymers of the same LVN.

Further research into the application of catalyst compositions containing an alkoxy-substituted bisphosphine as component c) for the preparation of polymers of carbon monoxide with ethene and optionally one of more other $\alpha$-olefins, which polymers have an LVN (60) of 0.5-2.5 dl/g and a melting point above 225°C, has now surprisingly shown that when these catalyst compositions are used, the two obstacles mentioned hereinbefore which were the reason why recirculation of catalyst-containing liquid could not be considered, are substantially removed. For it has been found that when the formed polymer is separated from the reaction mixture after these catalyst compositions are applied, this results in a liquid which contains a substantial portion of the amount of palladium originally present in the catalyst composition, notably as a rule more than 60 %w. Further, it was found that this liquid contains only a minor quantity of oligomers, as a rule less than 0.1 %w calculated on formed polymer. On account of the combination of these two properties, the liquid is excellently suitable to be used as catalyst solution in a following preparation, of similar alternating polymers or of other alternating polymers of carbon monoxide with one or more olefinically unsaturated compounds.

The present patent application therefore relates to a process for the preparation of polymers, in which process Polymers I of carbon monoxide with one or more olefinically unsaturated compounds are prepared by contacting the monomers at an elevated temperature and pressure with a catalyst solution emanating from a previous polymerization in which Polymers II of carbon monoxide with ethene and optionally one or more other $\alpha$-olefins, which polymers have an LVN (60) of 0.5-2.5 dl/g and a melting point above 225°C, were prepared by contacting the monomers at an elevated temperature and pressure with a solution of a catalyst composition in a diluent in which the Polymers II are insoluble or virtually insoluble, which catalyst composition was based upon

a) a palladium compound,

b) an anion of an acid with a pKa of less than 4, and

c) a bisphosphine of the general formula $(R_2)_2$P-R-P$(R_2)_2$, wherein $R_2$ represents an aryl group which holds at least one alkoxy substituent ortho in respect to the phosphorus atom to which the aryl group is bound and R is a bivalent organic bridging group containing at least two carbon atoms in the bridge,

while after termination of the polymerization, the catalyst solution needed for preparing Polymers I was obtained by separating the formed solid Polymers II from the polymerization mixture.

If in the preparation of Polymers II use is made of a monomer mixture which, in addition to ethene, contains one or more other $\alpha$-olefins, these $\alpha$-olefins preferably contain fewer than 10 carbon atoms per molecule. If in the preparation of Polymers II, the starting mixture is such a monomer mixture, it preferably contains only one other $\alpha$-olefin, and in particular propene. Polymers II are preferably prepared at a temperature of from 40 to 120°C, an overall pressure of from 20 to 150 bar and an $\alpha$-olefin/carbon monoxide partial pressure ratio of from 0.5 to 5, and in particular at a temperature of from 50 to 100°C, an overall pressure of from 30 to 100 bar and an $\alpha$-olefin/carbon monoxide partial pressure ratio of from 0.6 to 3.5. The preparation of Polymers II is carried out in a diluent in which the polymers are insoluble or virtually insoluble. Very suitable diluents are lower alcohols and in particular methanol. In the preparation of Polymers II, it is preferred to use such a quantity of catalyst composition per mol of $\alpha$-olefin to be polymerized, as to contain $10^{-7}$-$10^{-3}$ and in particular $10^{-6}$-$10^{-4}$ mol of palladium.

In the catalyst composition that is used in the preparation of Polymers II, component a) is preferably a palladium salt of a carboxylic acid, and palladium acetate in particular. As component b), the catalyst composition preferably contains an anion of an acid with a pKa of less than 2, and in particular trifluoroacetic acid. Component b) is by preference present in the catalyst composition in a quantity of from 0.5 to 50 and in particular of from 1 to 25 mol per mol of palladium. Component b) may be incorporated in the catalyst composition either in the form of an acid or in the form of a salt. When a salt is used as component b), preference is given to a cupric salt.

In the catalyst composition that is used in the preparation of Polymers II, group $R_2$ which is present in component c) is preferably a phenyl group containing at least one methoxy substituent in a position ortho in respect to the phosphorus atom to which the phenyl group is bound and the bridging group R preferably contains three atoms in the bridge, at least two of which are carbon atoms. Examples of suitable bridging groups R are the $-CH_2-CH_2-CH_2$ group, the $-CH_2-C(CH_3)_2-CH_2-$ group and the $-CH_2-Si(CH_3)_2-CH_2-$group. Bisphosphines that can be very suitably used as components c) in the catalyst compositions are 1,3-bis[di(2-methoxyphenyl)phosphino]propane, 1,3-bis[di(2,4-dimethoxyphenyl)phosphino]propane, 1,3-bis[di(2,6-dimethoxyphenyl)phosphino]propane, and 1,3-bis[di(2,4,6-trimethoxyphenyl)phosphino]-propane.

In the preparation of Polymers II, preference is given to the use of a catalyst composition comprising 1,3-bis[di(2-methoxyphenyl)phosphino]propane as component c). In the catalyst compositions, the bisphosphines are preferably used in a quantity of from 0.5 to 2 and in particular of from 0.75 to 1.5 mol per mol of palladium.

In order to enhance the activity of the catalyst compositions that are used in the preparation of Polymers II, a 1,4-quinone may be incorporated as component d). For this purpose, 1,4-benzoquinone and 1,4-naphthoquinone are very suitable. The quantity of 1,4-quinone used is preferably from 5 to 5000 mol and in particular from 10 to 1000 mol per mol of palladium.

Eligible olefinically unsaturated compounds which are polymerized with carbon monoxide during the preparation of Polymers I are compounds consisting exclusively of carbon and hydrogen as well as compounds which, in addition to carbon and hydrogen, contain one or more hetero-atoms. It is preferred that in the preparation of Polymers I, one or more α-olefins are used as olefinically unsaturated compounds. Special preference is given to a method of preparing Polymers I in which the monomer mixture, temperature and overall pressure applied are the same as those applied in the preparation of Polymers II.

The process of the invention may very suitably be carried out as a recirculation process in which the catalyst-containing liquid that is obtained after Polymers II are separated from the polymerization mixture, is recirculated to the polymerization reactor and there contacted once again with a carbon monoxide/α-olefin mixture that is identical to the one that was used in the preparation of Polymers II. If in this case the polymerization reaction is carried out under the same reaction conditions as were employed in the preparation of Polymers II, the difference between Polymers I and Polymers II will naturally cease to exist. If the process of the invention is carried out as a recirculation process for the preparation of a certain type of polymers of carbon monoxide with ethene and optionally one or more other α-olefins, which polymers have an LVN (60) of 0.5-2.5 dl/g and a melting point above 225°C, it is preferred to adjust both the volume of the recirculation liquid and the amount of catalyst composition present therein in order to create in the reactor a situation which corresponds substantially with that of the preceding polymerization reaction. For the amount of catalyst composition, this means that fresh catalyst composition will have to be added to the recirculation liquid, since part of the catalyst composition used originally has remained behind in the polymer prepared during the preceeding polymerization reaction and cannot be removed therefrom by washing. As far as the volume of the recirculation liquid is concerned, the available volume is as a rule larger than the volume needed in the polymerization reactor. This is due to the fact that after the polymer formed has been separated from the polymerization mixture, for instance by filtration, a considerable portion of the catalyst-containing diluent remains behind in the polymer as attached liquid and can only be expelled therefrom by thorough washing with fresh diluent. Since, obviously, in the process of the invention it is important, to capture as much of the available catalyst composition as possible for reuse, the catalyst-containing filtrate and the catalyst-containing wash liquid are joined together. Any surplus of diluent can be removed in a simple way from the recirculation liquid by distillation. Although the oligomer production in the preparation of Polymers II according to the invention is low, repeated recirculation of the catalyst-containing liquid may in the long run still lead to undesirable oligomer build-up. This can be prevented in a simple way by separating a small portion from the recirculation flow as a slip stream. If desired, diluent that has been purified by distillation can be reclaimed from the combined slip streams for reuse in the process.

The invention is now illustrated with the aid of the following examples.

Example 1

A carbon monoxide/ethene copolymer was prepared as follows. A mechanically stirred autoclave with a volume of 3.8 l was charged with 2 l methanol. After the contents of the autoclave were brought to a temperature of 50°C, such quantities of ethene and carbon monoxide were blown in that the ethene partial pressure was 13 bar and the carbon monoxide partial pressure was 27 bar. Subsequently, a catalyst solution was introduced into the autoclave which comprised
45 ml methanol,
15 ml toluene,
0.1 mmol palladium acetate,
2 mmol trifluoroacetic acid, and
0.12 mmol 1,3-bis(diphenylphosphino]propane.

The pressure inside the autoclave was kept up by the introduction of a 1:1 carbon monoxide/ethene mixture. Polymerization was terminated after 5.2 hours by cooling the reaction mixture to room temperature and releasing the pressure. The copolymer was filtered off to obtain 1.1 l filtrate. Next, the copolymer was washed with 1.3 l of fresh methanol and dried at 70°C. The yield was 72 g of copolymer. The polymerization rate was 1.3 kg copolymer/g palladium.hour. The copolymer had an LVN (60) of 1.8 dl/g and a melting point of 257°C. The filtrate and the wash liquid were joined together. Thus, 2.4 l methanolic solution was obtained which contained 1.4 mg palladium and 0.94 g oligomers. This means that 13 %w of the palladium present in the catalyst had gone into the liquid, while the oligomer production, calculated on copolymer formed, was 1.3 %w.

Example 2

A carbon monoxide/ethene/propene terpolymer was prepared substantially in the same way as the copolymer of Example 1, except for the following differences
a) such quantities of ethene, propene and carbon monoxide were pressed into the autoclave that the ethene partial pressure was 15 bar, the propene partial pressure was 7 bar and the carbon monoxide partial pressure was 32 bar, and
b) the reaction time was 6 hours.

The yield was 108 g of terpolymer. The polymerization rate was 1.7 kg terpolymer/g palladium.hour. The terpolymer had an LVN (60) of 0.8 dl/g and a melting point of 238°C. After the filtrate and the wash liquid were joined together, 2.3 l methanolic solution containing 1.6 mg palladium and 1.2 g oligomers was obtained. This means that 15 %w of the palladium present in the catalyst had gone into the liquid, while the oligomer production, calculated on terpolymer formed, was 1.1 %w.

Example 3

A carbon monoxide/ethene copolymer was prepared substantially in the same way as the copolymer of Example 1, except for the following differences
a) the reaction temperature was 80°C,

b) such quantities of ethene and carbon monoxide were pressed into the autoclave that the ethene partial pressure was 32 bar and the carbon monoxide partial pressure was 28 bar.
c) the catalyst solution employed comprised:
9 ml methanol,
3 ml toluene,
0.02 mmol palladium acetate,
0.4 mmol trifluoroacetic acid, and
0.024 mmol 1,3-bis[di(2-methoxyphenyl)-phosphino]propane, and
d) the reaction time was 13 hours.

The yield was 111 g of copolymer. The polymerization rate was 4 kg copolymer/g-palladium.hour. The copolymer had an LVN (60) of 4.3 dl/g and a melting point of 256°C. After the filtrate and the wash liquid were joined together, 2.1 l methanolic solution was obtained which contained 0.36 mg palladium and 0.1 g oligomers. This means that 17 %w of the palladium present in the catalyst had gone into the liquid, while the oligomer production, calculated on copolymer formed, was 0.09 %w.

Example 4

A carbon monoxide/ethene/propene terpolymer was prepared substantially in the same way as the copolymer of Example 1, except for the following differences
a) the reaction temperature was 80°C,
b) such quantities of ethene, propene and carbon monoxide were pressed into the autoclave that the ethene partial pressure was 23 bar, the propene partial pressure was 19 bar and the carbon monoxide partial pressure was 38 bar,
c) the catalyst solution employed was the same as that of Example 3, and
d) the reaction time was 8.5 hours.

The yield was 168 g of terpolymer. The polymerization rate was 9.3 kg terpolymer/g-palladium.hour. The terpolymer had an LVN (60) of 2.2 dl/g and a melting point of 221°C.
After the filtrate and the wash liquid were joined together, 1.9 l of methanolic solution was obtained which contained 0.76 mg palladium and 0.13 g oligomers. This means that 36 %w of the palladium present in the catalyst had gone into the liquid, while the oligomer production, calculated on terpolymer formed, was 0.08 %w.

Example 5

A carbon monoxide/ethene copolymer was prepared substantially in the same way as the copolymer of Example 1, except for the following differences
a) the reaction temperature was 90°C,

b) such quantities of ethene and carbon monoxide were pressed into the autoclave that the ethene partial pressure was 62 bar and the carbon monoxide partial pressure was 18 bar,

c) the catalyst solution employed was the same as that used in Example 3, and

d) the reaction time was 1.4 hours.

The yield was 98 g of copolymer. The polymerization rate was 33 kg copolymer/g palladium.hour. The copolymer had an LVN (60) of 1.9 dl/g and a melting point of 260°C. After the filtrate and the wash liquid were joined together, 2.2 l methanolic solution was obtained which contained 1.6 mg palladium and 0.09 g oligomers. This means that 75 %w of the palladium present in the catalyst had gone into the liquid, while the oligomer production, calculated on copolymer formed, was 0.09 %w.

Example 6

A carbon monoxide/ethene/propene terpolymer was prepared substantially in the same way as the copolymer of Example 1, except for the following differences

a) the reaction temperature was 90°C,

b) such quantities of ethene, propene and carbon monoxide were pressed into the autoclave that the ethene partial pressure was 30 bar, the propene partial pressure was 12 bar and the carbon monoxide partial pressure was 38 bar,

c) the catalyst solution employed was the same as that of Example 3, and

d) the reaction time was 2.1 hours.

The yield was 64 g of terpolymer. The polymerization rate was 14 kg copolymer/g palladium.hour. The terpolymer had an LVN (60) of 1.5 dl/g and a melting point of 237°C. After the filtrate and the wash liquid were joined together, 2.4 l of methanolic solution was obtained which contained 1.4 mg palladium and 0.05 g oligomers. This means that 66 %w of the palladium present in the catalyst had gone into the liquid, while the oligomer production, calculated on terpolymer formed, was 0.08 %w.

Example 7

A carbon monoxide/ethene copolymer was prepared substantially in the same way as the copolymer of Example 5, except for the following differences

a) not 2 l of fresh methanol but the 2.2 l of palladium-containing methanolic solution obtained in Example 5 was introduced into the autoclave,

b) no fresh catalyst solution was added, and

c) the reaction time was 2 hours.

The yield was 96 g of copolymer. The polymerization rate was 30 kg copolymer/g palladium.hour. The copolymer had an LVN (60) of 1.7 dl/g and a melting point of 258°C.

Example 8

A carbon monoxide/ethene/propene terpolymer was prepared substantially in the same way as the terpolymer of Example 6, except for the following differences

a) not 2 l of fresh methanol but the 2.4 l of palladium-containing methanolic solution obtained in Example 6 was introduced into the autoclave,

b) no fresh catalyst solution was added, and

c) the reaction time was 5.9 hours.

The yield was 96 g of terpolymer. The polymerization rate was 12 kg terpolymer/g palladium.hour. The terpolymer had an LVN (60) of 1.6 dl/g and a melting point of 238°C.

Of Examples 1-8, Examples 7 and 8 are examples in accordance with the invention. In these examples, Polymers I were prepared by contacting the monomers with a catalyst solution which came from a preceding polymerization reaction in which Polymers II were prepared. Such preceding polymerization reactions for the preparation of Polymers II are described in Examples 5 and 6, respectively. Examples 1-4 fall outside the scope of the invention and have been included in the patent application for comparison. Examples 1 and 2 demonstrate that when polymers with an LVN (60) of from 0.5 to 2.5 dl/g and a melting point above 225°C are prepared by employing a catalyst composition comprising a bisphosphine of the general formula $(R_1)_2P-R-P(R_1)_2$ as component c), the result, after the produced solid polymer has been separated from the polymerization mixture, is a liquid which contains only a small portion of the amount of palladium originally present in the catalyst composition and, in addition, a considerable amount of oligomers, calculated on formed polymer. Examples 3 and 4 demonstrate that both when copolymers with an LVN (60) above 2.5 dl/g and and when terpolymers with a melting point below 225°C are prepared, the result, after the produced polymer has been separated from the polymerization mixture, is a liquid which contains only a small portion of the amount of palladium originally present in the catalyst composition, in spite of the fact that the catalyst composition used contained a bisphosphine of the general formula $(R_2)_2P-R-P(R_2)_2$ as component c).

With the aid of $^{13}$C-NMR analysis it was established that the carbon monoxide/ethene copolymers prepared by Examples 1, 3, 5 and 7 had a linear structure and that they were made up of units of the formula $-(CO)-(C_2H_4)-$. With the aid of $^{13}C$-NMR analysis it was also established that the carbon monoxide/ethene/propene terpolymers prepared by Examples 2, 4, 6 and 8 had a linear structure and that they were made up of units of the formula $-(CO)-(C_2H_4)-$ and units of the formula $-(CO)-(C_3H_6)-$, which units occurred randomly distributed within the polymers.

## Claims

1. Process for the preparation of polyketone polymers, characterized in that Polymers I of carbon monoxide with one or more olefinically unsaturated compounds are prepared by contacting the monomers at an elevated temperature and pressure with a catalyst solution emanating from a previous polymerization, in which Polymers II of carbon monoxide with ethene and optionally one or more other $\alpha$-olefins, which polymers have an LVN (60) of 0.5-2.5 dl/g and a melting point above 225°C, were prepared by contacting the monomers at an elevated temperature and pressure with a solution of a catalyst composition in a diluent in which the Polymers II are insoluble or virtually insoluble, which catalyst composition was based upon
   a) a palladium compound,
   b) an anion of an acid with a pKa of less than 4, and
   c) a bisphosphine of the general formula $(R_2)_2P-R-P(R_2)_2$, wherein $R_2$ represents an aryl group which holds at least one alkoxy substituent ortho in respect to the phosphorus atom to which the aryl group is bound and R is a bivalent organic bridging group containing at least two carbon atoms in the bridge,
   while after termination of the polymerization, the catalyst solution needed for preparing Polymers I was obtained by separating the formed solid Polymers II from the polymerization mixture.

2. Process as claimed in claim 1, characterized in that if in the preparation of Polymers II a monomer mixture was employed which, in addition to ethene, included one or more further $\alpha$-olefins, these $\alpha$-olefins contained fewer than 10 carbon atoms per molecule.

3. Process as claimed in claim 1 or 2, characterized in that the preparation of Polymers II was carried out at a temperature of from 40 to 120°C, an overall pressure of from 20 to 150 bar and an $\alpha$-olefin/carbon monoxide partial pressure ratio of from 0.5 to 5.

4. Process as claimed in one or more of claims 1-3, characterized in that in the preparation of Polymers II, such a quantity of catalyst composition was employed per mol of $\alpha$-olefin to be polymerized, as to contain $10^{-7}$-$10^{-3}$ mol of palladium.

5. Process as claimed in one or more of claims 1-4, characterized in that in the preparation of Polymers II, the catalyst composition employed included from 0.5 to 50 mol of component b) and from 0.5 to 2 mol of component c), per mol of palladium.

6. Process as claimed in one or more of claims 1-5, characterized in that in the preparation of Polymers I, the monomer mixture, temperature and overall pressure applied are the same as those applied in the preparation of Polymers II.

7. Process as claimed in claim 6, characterized in that it is carried out as a recirculation process.

8. Process as claimed in claim 7, characterized in that, before the catalyst solution is recirculated to the polymerization reactor, its volume is reduced by removing part of the diluent, for instance by boiling off, and that the catalyst concentration is increased by adding fresh catalyst composition, so as to substantially adjust the volume and the catalyst concentration to those applied in the preceding polymerization reaction.

9. Process as claimed in claim 7 or 8, characterized in that a small portion is separated from the recirculation flow as a slip stream.

## Patentansprüche

1. Verfahren zur Herstellung von Polyketonpolymeren,
   dadurch gekennzeichnet,
   daß Polymere I aus CO und einer oder mehreren olefinisch ungesättigten Verbindung-(en) hergestellt werden durch Kontaktieren der Monomeren bei erhöhter Temperatur und erhöhtem Druck mit einer Katalysatorlösung, die aus einer vorhergehenden Polymerisation stammt, in welcher Polymere mit einem LVN-(60)-Wert von 0,5 bis 2,5 dl/g und einem Schmelzpunkt oberhalb 225°C aus CO und Ethen und gegebenenfalls einem oder mehreren anderen $\alpha$-Olefin(en) durch Kontaktieren der Monomeren bei erhöhter Temperatur und erhöhtem Druck mit einer Lösung der Katalysatorzusammensetzung in einem Verdünnungsmittel, in welchem die Polymere II unlöslich oder praktisch unlöslich sind, hergestellt worden sind, welche Katalysatorzusammensetzung basiert auf

a) einer Palladiumverbindung,

b) dem Anion einer Säure mit einem pKa-Wert von weniger als 4 und

c) einem Bisphosphin der allgemeinen Formel $(R_2)_2P-R-P(R_2)_2$, in welcher $R_2$ eine Arylgruppe bedeutet, welche mindestens einen Alkoxysubstituent in o-Stellung in Bezug auf das Phosphoratom aufweist, an welches diese Arylgruppe gebunden ist, und R eine zweiwertige organische Brückengruppe mit mindestens zwei Kohlenstoffatomen in der Brücke darstellt,

wobei nach Beendigung der Polymerisation die für die Herstellung die Polymere I benötigte Katalysatorlösung durch Abtrennen der gebildeten festen Polymere II aus der Polymerisationsmischung erhalten worden ist.

2. Verfahren wie in Anspruch 1 beansprucht,
dadurch gekennzeichnet,
daß für die Herstellung der Polymere II eine Monomerenmischung verwendet worden ist, welche zusätzlich zu Ethen ein oder mehrere weitere α-Olefin(e) enthielt, wobei diese α-Olefine weniger als 10 Kohlenstoffatome im Molekül enthielten.

3. Verfahren wie in Anspruch 1 oder 2 beansprucht,
dadurch gekennzeichnet,
daß die Herstellung der Polymere II bei einer Temperatur von 40 bis 120°C, einem Gesamtdruck von 20 und 150 bar und einem Verhältnis der Partialdrucke von α-Olefin:CO von 0,5:1 bis 5:1 durchgeführt worden ist.

4. Verfahren wie in irgendeinem oder mehreren der Ansprüche 1 bis 3 beansprucht,
dadurch gekennzeichnet,
daß für die Herstellung der Polymeren II eine solche Menge an Katalysatorzusammensetzung je Mol zu polymerisierendes α-Olefin verwendet worden ist, welche einem Gehalt von $10^{-7}$ bis $10^{-3}$ Mol an Palladium entspricht.

5. Verfahren wie in irgendeinem oder mehreren der Ansprüche 1 bis 4 beansprucht,
dadurch gekennzeichnet,
daß die für die Herstellung der Polymere II verwendete Katalysatorzusammensetzung je Mol Palladium 0,5 bis 50 Mol der Komponente b) und 0,5 bis 2 Mol der Komponente c) enthielt.

6. Verfahren wie in irgendeinem oder mehreren der Ansprüche 1 bis 5 beansprucht,
dadurch gekennzeichnet,
daß für die Herstellung der Polymere I die angewendete Monomerenmischung, die Temperatur und der angewendete Gesamtdruck die gleichen sind wie für die Herstellung der Polymeren II.

7. Verfahren wie in Anspruch 6 beansprucht,
dadurch gekennzeichnet,
daß es als ein Kreislaufverfahren durchgeführt wird.

8. Verfahren wie in Anspruch 7 beansprucht,
dadurch gekennzeichnet,
daß die Katalysatorlösung vor ihrer Rückführung in den Polymerisationsreaktor durch Entfernen eines Teils des Verdünnungsmittels im Volumen verringert wird, beispielsweise durch Absieden, und daß die Katalysatorkonzentration durch Zusatz von Frischkatalysator erhöht wird, wodurch das Volumen und die Katalysatorkonzentration im wesentlichen den Werten angeglichen wird, welche in der vorhergehenden Polymerisation angewendet worden sind.

9. Verfahren wie in Anspruch 7 oder 8 beansprucht,
dadurch gekennzeichnet,
daß ein kleiner Anteil aus dem Kreislaufstrom in Form eines Nebenstroms abgetrennt wird.

**Revendications**

1. Procédé de préparation de polymères polycétoniques, caractérisé en ce que l'on prépare des polymères I de monoxyde de carbone avec un ou plusieurs composés à insaturation oléfinique grâce à la mise en contact des monomères à une température et une pression élevées avec une solution catalytique provenant d'une polymérisation précédente, dans laquelle on a préparé des polymères II de monoxyde de carbone avec de l'éthène et éventuellement une ou plusieurs autres alpha-oléfines, ces polymères ayant un IVL (60) de 0,5 - 2,5 dl/g et un point de fusion supérieur à 225°C, par la mise en contact des monomères à une température et une pression élevées avec une solution d'une composition catalytique dans un diluant dans lequel les polymères II sont insolubles ou pratiquement insolubles, cette composition catalytique étant basée sur

a) un composé au palladium,

b) un anion d'un acide avec un pKa inférieur à 4, et

c) une bisphophine de formule générale $(R_2)_2P-R-P(R_2)_2$, dans laquelle $R_2$ représente un groupe aryle qui porte au moins un substituant alcoxy en ortho par rapport à l'atome de phosphore auquel est lié le groupe aryle et R est un groupe pontant organique bivalent contenant au moins deux atomes de carbone dans le pont,

tandis qu'à la fin de la polymérisation, on obtient la solution catalytique nécessaire pour la préparation des polymères I en séparant les polymères solides formés II d'avec le mélange de polymérisation.

2. Procédé selon la revendication 1, caractérisé en ce que si, dans la préparation des polymères II, on utilise un mélange de monomères qui, en plus de l'éthène, comprend une ou plusieurs autres alpha-oléfines, ces alpha-oléfines contiennent moins de 10 atomes de carbone par molécule.

3. Procédé selon la revendication 1 ou 2, caractérisé en ce que l'on effectue la préparation des polymèes II à une température allant de 40 à 120°C, sous une pression globale comprise entre 20 et 150 bars et avec un rapport de pression partielle alpha-oléfine /monoxyde de carbone compris entre 0,5 et 5.

4. Procédé selon une ou plusieurs des revendications 1 à 3, caractérisé en ce que, dans la préparation des polymères II, on utilise une quantité de composition catalytique par mole d'alpha-oléfine à polymériser, telle qu'elle contienne $10^{-7}$ - $10^{-3}$ moles de palladium.

5. Procédé selon une ou plusieurs des revendications 1 à 4, caractérisé en ce que,dans la préparation des polymères II, la composition catalytique utilisée comprend de 0,5 à 50 moles de composant b) et de 0,5 à 2 moles de composant c), par mole de palladium.

6. Procédé selon une ou plusieurs des revendications 1 à 5, caractérisé en ce que, dans la préparation des polymères I, le mélange de monomères, la température et la pression globale appliqués sont les mêmes que ceux appliqués dans la préparation des polymères II.

7. Procédé selon la revendication 6, caractérisé en ce qu'on l'effectue sous la forme d'un procédé de recyclage.

8. Procédé selon la revendication 7, caractérisé en ce que, avant le recyclage de la solution catalytique vers le réacteur de polymérisation, on réduit son volume en éliminant une partie de diluant, par exemple en le chassant par ébullition, et en ce que l'on augmente la concentration de catalyseur en ajoutant de la composition catalytique fraîche, afin d'ajuster pratiquement le volume et la concentration de catalyseur à ceux appliqués dans la réaction de polymérisation précédente.

9. Procédé selon la revendication 7 ou 8, caractérisé en ce que l'on sépare une petite portion provenant du courant de recyclage sous la forme d'un courant de glissement.